# EUROPÄISCHE PATENTSCHRIFT

(11) **EP 2 103 495 B1**
(45) Veröffentlichungstag und Bekanntmachung des Hinweises auf die Patenterteilung: **09.11.2011**
(21) Anmeldenummer: 09006153.2
(22) Anmeldetag: 07.07.2007
(51) Int. Cl.: B60T 17/22, F16D 66/02, B62L 3/02

(54) **Hydraulische Bremsanlage für Zweiräder**
Hydraulic braking device for two-wheelers
Dispositif de freinage hydraulique pour deux roues

(30) Priorität: 04.08.2006 DE 102006036415
(43) Veröffentlichungstag der Anmeldung: 23.09.2009
(62) Teilanmeldung aus: 07013335.0
(73) Patentinhaber: Gustav Magenwirth GmbH & Co. KG, 72574 Bad Urach (DE)
(72) Erfinder: Künstle, Reiner, 72555 Metzingen/Neuhausen (DE); Ruckh, Stefan, 72587 Römerstein/Zainingen (DE)
(74) Vertreter: Friese, Martin

(56) Entgegenhaltungen:
- DE-A1- 2 630 738
- DE-A1- 3 505 587
- DE-U1- 20 117 835
- GB-A- 2 204 371

## Beschreibung

Die Erfindung bezieht sich auf eine hydraulische Bremsanlage für Zweiräder, insbesondere Fahrräder, mit mindestens einer hydraulischen Betätigungsvorrichtung und einer am zu bremsenden Rad befindlichen, hydraulischen Bremsvorrichtung, wobei die Bremsanlage ein mit Hydraulikflüssigkeit gefülltes, hydraulisches Gebersystem mit einem Geberkolben-Zylinder und einem darin geführten Geberkolben aufweist, wobei die Bremsvorrichtung einen in einem Bremszylinder geführten Bremskolben aufweist, der zur Beaufschlagung eines Bremsbelages mittels in einer zum Bremszylinder gehörenden Druckkammer befindlichen Hydraulikflüssigkeit verstellbar ist, wobei eine zum Geberkolben-Zylinder gehörende Geberkolben-Kammer hydraulisch mit der Druckkammer der Bremsvorrichtung verbunden ist, wobei die Bremsanlage eine automatische Bremsbelagsnachstellung aufweist und wobei die Bremsanlage einen Ausgleichsbehälter mit Hydraulikflüssigkeit aufweist, der zur Anzeige der Bremsbelagsstärke eine Füllstandsanzeige für die Hydraulikflüssigkeit aufweist.

Eine hydraulische Bremsanlage für Fahrzeuge ist beispielsweise aus der GB 2 204 371 A bekannt. Diese Bremsanlage weist eine hydraulische Betätigungsvorrichtung mit einem Fußpedal auf. An der Betätigungsvorrichtung ist weiterhin ein Ausgleichsbehälter für Hydraulikflüssigkeit angeordnet. An den einzelnen Rädern sind hydraulische Bremsvorrichtungen angeordnet, die jeweils über eine Hydraulikleitung mit der Betätigungsvorrichtung verbunden sind.

Zur Kontrolle der Bremsbeläge und zur Feststellung des Verschleißzustands im Fahrbetrieb kann die Bremsanlage eine Verschleißanzeige aufweisen.

Aus der DE 26 30 738 ist beispielsweise eine hydraulische Bremsanlage bekannt, die eine solche Verschleißanzeige für die Bremsbeläge aufweist. Dazu ist in dem Ausgleichsbehälter ein Schwimmer angeordnet, der auf der Hydraulikflüssigkeit aufschwimmt und mit einem Anzeiger, der wenigstens teilweise aus dem Ausgleichbehälter herausragt, verbunden ist. Der Anteil des Anzeigers, der aus dem Ausgleichsbehälter herausragt ist direkt proportional zum Flüssigkeitsstand im Ausgleichbehälter. Aufgrund der automatischen Belagsnachstellung ist der Füllstand wiederum ein Indiz für den Bremsbelagsverschleiß.

Eine ähnliche Verschleißanzeige mit einem Schwimmer ist aus der DE 201 17 835 U1 bekannt.

Der Anzeiger ist durch eine Öffnung in dem Ausgleichsbehälter nach Außen geführt. Um ein Austreten von Hydraulikflüssigkeit zu verhindern ist die Öffnung meist an der Oberseite des Ausgleichsbehälters angeordnet und abgedichtet, wobei die Beweglichkeit des Anzeigers gewährleistet sein muss. Eine vollständige Abdichtung ist daher unmöglich. Bei Fahrrädern, die häufig auch in extremen Schräglagen benutzt oder auch abgelegt werden, kann durch diese nicht vollständig abgedichtete Öffnung Hydraulikflüssigkeit austreten oder Schmutz in die Hydraulikflüssigkeit hinein gelangen. Beides kann zu einem Ausfall der Bremsfunktion führen.

Es besteht daher die Aufgabe, bei einer hydraulischen Bremsanlage der eingangs erwähnten Art eine Überwachungseinrichtung zur Kontrolle der Stärke der Bremsbeläge zu schaffen, welche in allen Lagen betriebssicher, zuverlässig und kostengünstig ist, wobei auch während des Fahrbetriebs eine Kontrolle möglich ist.

Zur Lösung dieser Aufgabe schlägt die Erfindung vor, dass der Ausgleichsbehälter eine elastische, membranartige Wandung aufweist, die in Abhängigkeit vom Hydraulikflüssigkeitsfüllstand unterschiedliche Lagen einnimmt und die Füllstandsanzeige bildet.

Die Bremsanlage weist ein mit Hydraulikflüssigkeit gefülltes, hydraulisches Gebersystem mit einem Geberkolben-Zylinder und einem darin geführten Geberkolben auf, wobei die Bremsvorrichtung einen in einem Bremszylinder geführten Bremskolben aufweist, der zur Beaufschlagung eines Bremsbelages mittels in einer zum Bremszylinder gehörenden Druckkammer befindlichen Hydraulikflüssigkeit verstellbar ist und wobei eine zum Geberkolben-Zylinder gehörende Geberkolben-Kammer hydraulisch mit der Druckkammer der Bremsvorrichtung verbunden ist.

Die Bremsanlage weist eine automatische Bremsbelagsnachstellung auf, und hat erfindungsgemäß eine Füllstandsanzeige für die im hydraulischen Gebersystem befindliche Hydraulikflüssigkeit, als Maß für die von der Bremsbelagsstärke abhängigen Volumenzunahme von Hydraulikflüssigkeit in der Bremsvorrichtungs-Druckkammer. Das mit abnehmender Bremsbelagsstärke zunehmende Füllvolumen der Druckkammer bewirkt also eine Abnahme der im angeschlossenen hydraulischen Gebersystem befindlichen Hydraulikflüssigkeit, was über eine Füllstandsanzeige detektiert und angezeigt werden kann.

Bei der erfindungsgemäßen Bremsanlage mit automatischer Bremsbelagsnachstellung sind keine hitzbeständigen, teuren und anfälligen Sensoren im Bereich der Bremsbeläge zur Bremsbelagszustandskontrolle während des Fahrbetriebs erforderlich. Die erfindungsgemäße Bremsvorrichtung ist schon aus diesem Grund betriebssicherer und kostengünstiger.

Das Volumen der Druckkammer wird durch das Nachstellen des Bremskolbens zum Ausgleich der abnehmenden Belagsstärke vergrößert, wodurch nach Volumenaustausch mehr Hydraulikflüssigkeit von der Druckkammer aufgenommen wird, während in gleichem Maß der Füllstand der Hydraulikflüssigkeit im Ausgleichbehälter abnimmt. Der Füllstand im Ausgleichbehälter dient auf diese Weise als Maß für den Zustand beziehungsweise die Stärke der Bremsbeläge aber auch zur Überwachung des hydraulischen Systems auf Leckage.

Die elastische Wandung des Ausgleichsbehälters kann durch einen Balg, insbesondere einen Faltenbalg mit einer Membrane gebildet sein, die in Abhängigkeit vom Hydraulikflüssigkeitsfüllstand unterschiedliche Lagen einnimmt.

Die Membrane kann bei abnehmendem Füllstand der Hydraulikflüssigkeit im Ausgleichsbehälter zum Beispiel eine zunehmende Konkavkrümmung oder auch eine abnehmende Konvexkrümmung zeigen. Als Füllstandsanzeige wäre aber auch eine Kolben-/Zylinderanordnung möglich.

Vorzugsweise weist die Bremsanlage mit der Druckkammer, der Geberkolben-Kammer und dem Ausgleichsbehälter ein luftdicht geschlossenes, hydraulisches System auf.

Dadurch kann über den durch die fehlende Hydraulikflüssigkeit im Ausgleichsbehälter entstehenden Unterdruck eine Füllstandsanzeige gesteuert werden.

Um den Füllstand der Hydraulikflüssigkeit im Ausgleichsbehälter exakt messen zu können, ist es zweckmäßig, wenn am Ausgleichsbehälter wenigstens ein Sensor zur Detektierung der Position der beweglichen Membrane angeordnet ist. Dabei kann der Sensor ein induktiver oder kapazitiver Sensor oder ein Magnetsensor sein.

Die Sensorvorrichtung kann dabei derart aufgebaut sein, dass der Sensor außen- oder innenseitig des Ausgleichsbehälters angeordnet ist, während außen- oder innenseitig der beweglichen Membrane des Ausgleichsbehälters, dem Sensor zugeordnet, ein Geber, beispielsweise ein Magnet, angeordnet ist. Der Sensor ist zweckmäßigerweise mit einer Mess- und Auswerteeinrichtung verbunden, die eine Füllstandsanzeige ansteuert, beispielsweise LEDs.

Die Membrane kann zur Messung der Füllstandshöhe einen Signalgeber aufweisen, dessen Position, die sich in Abhängigkeit von der Lage der Membrane verändert, die Füllstandsanzeige bildet. Dies ist konstruktiv einfach und erfordert keine weiteren technischen Hilfsmittel, so dass diese Ausführungsform einer erfindungsgemäßen Vorrichtung eine hohe Betriebssicherheit aufweist und leicht zu montieren ist.

Zur vereinfachten Ablesbarkeit weist das Gehäuse sichtseitig eine Abdeckung mit einer Öffnung auf, wobei die Membrane einen vorzugsweise etwa stabförmigen Signalgeber aufweist, der die Öffnung nach außen hin überragt und wobei der Überstand des Signalgebers ein Maß für den Füllstand im Ausgleichsbehälter ist.

Da die Betätigungsvorrichtung der Hydraulikbremse in der Regel im Lenkerbereich des Zweirades angeordnet ist, ist es zweckmäßig, wenn der Ausgleichsbehälter im Bereich der Betätigungsvorrichtung angeordnet und vorzugsweise in ein Gehäuse integriert ist. Durch das Gehäuse ist die Füllstandsanzeige vor äußeren Einflüssen geschützt und die Anordnung im Bereich der Betätigungsvorrichtung ermöglicht ein leichtes Ablesen auch während des Fahrbetriebs.

Die Erfindung wird im Folgenden anhand der in den Zeichnungen dargestellten Ausführungsbeispiele näher erläutert. Es zeigt in teilweise schematisierter Darstellung:
- Fig. 1: eine hydraulische Bremsanlage mit einer einen Bremshebel aufweisenden Betätigungsvorrichtung und einer über eine Hydraulikleitung angeschlossenen, im Schnitt dargestellten Bremsvorrichtung,
- Fig. 2: eine Betätigungsvorrichtung im Längsschnitt mit Ausgleichsbehälter, Geberkolben und Geberkolben-Zy- linder sowie mit einem Sensor und einem Geber,
- Fig. 3: eine gegenüber Fig. 2 vergrößerte Darstellung des im Längsschnitt dargestellten Ausgleichsbehälters mit Gehäuse und Sensor und Geber im Ausgleichsbe- hälter,
- Fig. 4 bis Fig. 6: einen Teil der Bremsvorrichtung mit in unterschied- lichen Positionen befindlichem Bremskolben sowie unterschiedlich abgenutzten Bremsbelägen,
- Fig. 7: eine Längsschnittansicht eines Ausgleichsbehälters mit einer Bremsbelag-Verschleißanzeige, die einen stabförmigen, eine Membrane berührenden Signalgeber aufweist,
- Fig. 8: eine Längsschnittansicht entsprechend Fig. 7, hier jedoch mit zur Membrane beabstandetem Signalgeber bei abgenützten Bremsbelägen und minimalem Füll- stand des Ausgleichsbehälters,
- Fig. 9: eine Längsschnittansicht eines Ausgleichsbehälters mit einem mit der Membrane verbundenen, stabförmi- gen Signalgeber bei maximaler Füllstandshöhe der Hydraulikflüssigkeit in dem Ausgleichsbehälter so- wie
- Fig. 10: bei minimaler Füllstandshöhe der Hydraulikflüssig- keit in dem Ausgleichsbehälter,
- Fig. 11 und Fig. 12: etwa Fig. 9 und Fig. 10 entsprechende Ansichten, hier jedoch mit markierten Abschnitten am stabför- migen Signalgeber sowie an einem Schutzgehäuse für den Signalgeber,
- Fig. 13 und Fig. 14: Längsschnittansichten eines Ausgleichsbehälters mit einer Bremsbelag-Verschleißanzeige, die einen la- schenförmigen Signalgeber aufweist, der in unter- schiedlichen Stellungen gezeigt ist und
- Fig. 15 und Fig. 16: Längsschnittansichten eines Ausgleichsbehälters mit einer Bremsbelag-Verschleißanzeige, die einen Schwenkzeiger als Signalgeber aufweist, der in un- terschiedlichen Stellungen gezeigt ist.

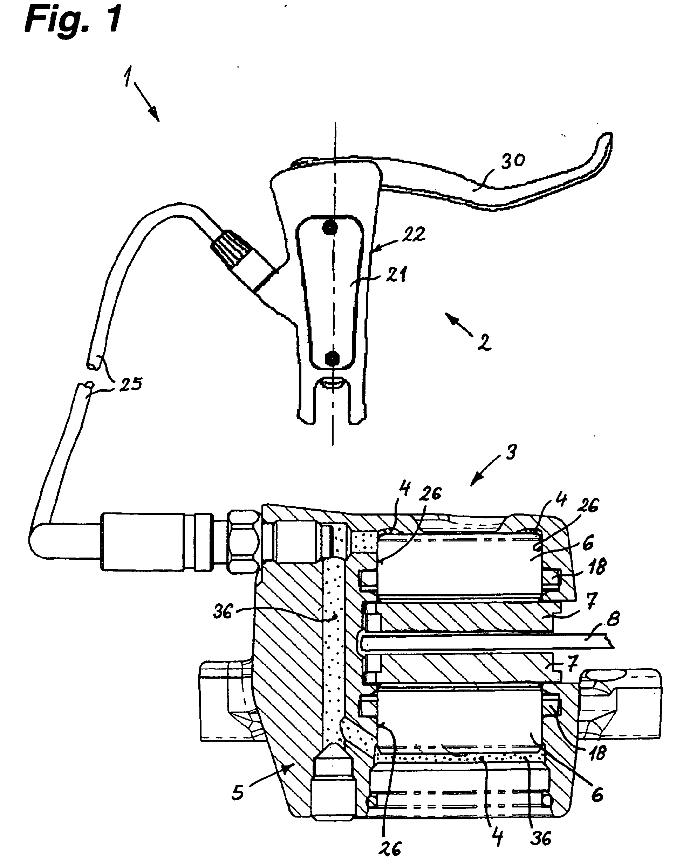

Fig. 1 zeigt eine im Ganzen mit 1 bezeichnete hydraulische Bremsanlage für Zweiräder, insbesondere Fahrräder, mit einer Betätigungsvorrichtung 2 und einer damit über eine Hydraulikleitung 25 verbundenen Bremsvorrichtung 3.

Die Betätigungsvorrichtung 2 weist einen handbetätigbaren Bremshebel 30 auf, mit dem über ein hydraulisches Gebersystem Hydraulikflüssigkeit 36 über die Hydraulikleitung 25 zu der Bremsvorrichtung 3 gefördert werden kann.

Die Bremsvorrichtung 3 weist eine Bremszange 5 auf, die an einer mit dem zu bremsenden Rad verbundenen Bremsscheibe 8 angeordnet ist. Die Bremsscheibe 8 wird beim Bremsen beidseitig mit zwei Bremsbelägen 7 beaufschlagt. Zum hydraulischen Verstellen der Bremsbeläge 7 sind in der Bremszange 5 in Bremszylindern 26 geführte, die Bremsbeläge 7 beaufschlagende Bremskolben 6 vorgesehen, die rückseitig von Hydraulikflüssigkeit 36 beaufschlagt werden, die sich in Druckkammern 4 befindet, welche an die Hydraulikleitung 25 angeschlossen und durch den rückwärtigen Teil der Bremszylinder 26 gebildet sind.

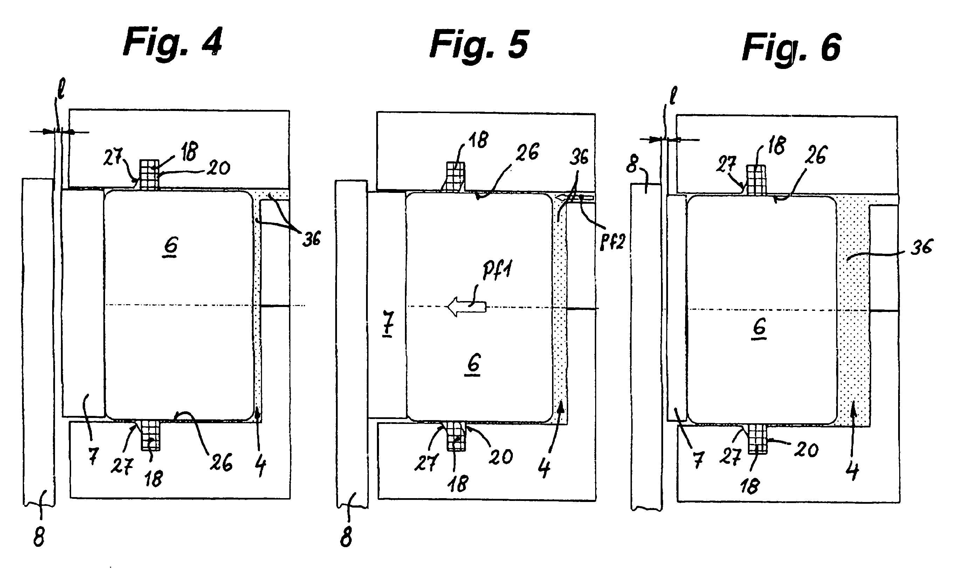

Die Bremskolben 6 sind, wie dies anhand der Figuren 4 bis 6 erkennbar ist, in den Bremszylindern 26 durch elastische Ringdichtungen 18 geführt, die in Ringnuten 20 mit einseitigen, den Bremsbelägen 7 zugewandten Anfasungen 27 eingesetzt sind und über welche die Bremskolben 6 in Längsrichtung beweglich gemäß dem Pfeil Pf1 gehalten sind. Dadurch ist eine automatische Bremsbelagsnachstellung gebildet.

Fig. 4 zeigt einen Teil der Bremsvorrichtung in unbetätigtem Zustand, wobei sich der Bremskolben 6 in Ausrückstellung befindet und der Bremsbelag 7 um das Lüftspiel 1 gelüftet ist und Abstand zur Bremsscheibe 8 hat.

Entsprechend Fig. 5 wird bei hydraulischer Druckbeaufschiagung des Bremskolbens 6 durch Zufuhr von Hydraulikflüssigkeit 36 in die Druckkammer 4 (Pfeil Pf2) der Bremskolben 6 in Richtung des Pfeiles Pf1 bewegt und drückt den Bremsbelag 7 gegen die Bremsscheibe 8. Dabei wird die Ringdichtung 18 elastisch in den Bereich der Anfasung 27 verformt. Bei Druckentlastung des Bremskolbens 6 sorgt die elastisch verformte Ringdichtung 18 für eine Rückstellung des Bremskolbens 6 und des damit verbundenen Bremsbelags 7 in die in Fig. 4 gezeigte Stellung.

Solange der Verstellweg des Bremskolbens 6 nicht größer ist als die durch die Anfasung 27 begrenzte, elastische Verformbarkeit der Ringdichtung 18, wird der Bremskolben 6 durch die Ringdichtung 18 an der Kontaktstelle gehalten, ohne dass an der Kontaktstelle eine Relativbewegung auftritt. Wird jedoch durch Abnutzung des Bremsbelags 7 der notwendige Verstellweg des Bremskolbens 6 größer, rutscht der Bremskolben 6 bei in Verformungsanschlag-Stellung befindlicher Ringdichtung 18 durch, bis der Bremsbelag 7 an der Bremsscheibe 8 anliegt. Durch diese automatische Bremsbelagsnachstellung bleibt das Lüftspiel 1 gleich, wie dies aus einem Vergleich von Fig. 4 mit neuem Belag und Fig. 6 mit abgenütztem Belag deutlich erkennbar ist.

Mit abnehmender Belagstärke nimmt das Volumen der Druckkammer 4 zu, während im gleichen Maße die Füllmenge im angeschlossenen, hydraulischen Gebersystem abnimmt.

Dies wird im dargestellten Ausführungsbeispiel für die erfindungsgemäße Bremsbelag-Überwachungseinrichtung verwendet, indem das Füllvolumen im hydraulischen Gebersystem überwacht und angezeigt wird.

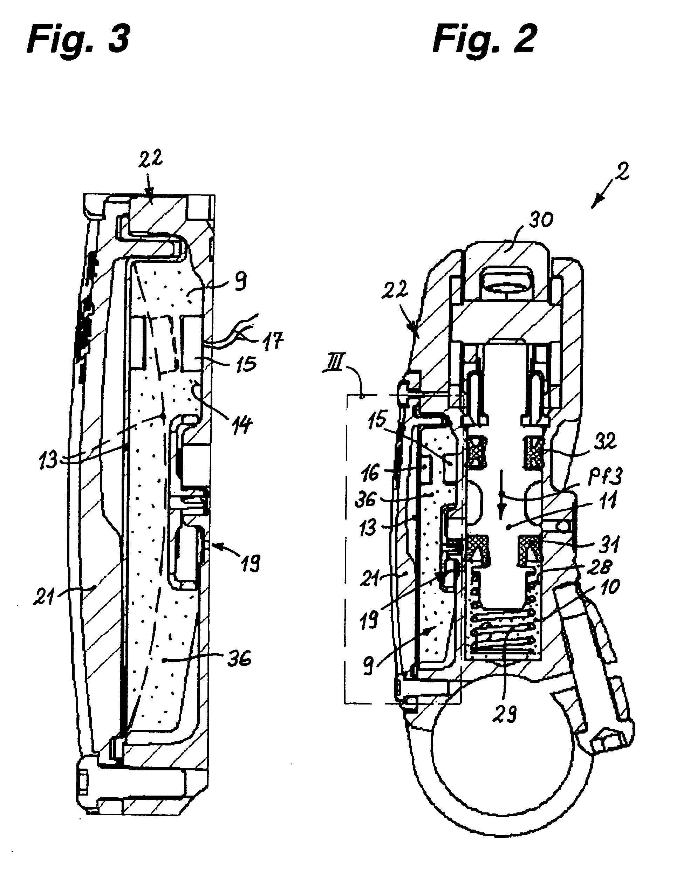

Das mit Hydraulikflüssigkeit 36 gefüllte, hydraulische Gebersystem mit der Betätigungsvorrichtung 2 weist, wie in Fig. 2 erkennbar, einen Geberkolben-Zylinder 28 und einen darin geführten Geberkolben 11 auf, wobei ein Teil des Zylinder 28 eine Geberkolben-Kammer 10 bildet. In dieser ist eine den Geberkolben 11 in eine Ausgangslage bewegende Rückstellfeder 29 angeordnet. Mit dem Bremshebel 30 wird der Geberkolben 11 beim Bremsen in Richtung des Pfeils Pf 3 gegen die Rückstellkraft bewegt. Der Geberkolben 11 weist einen Dichtring 31 als Primärdichtung auf, die beim Betätigen der Bremse für den Druckaufbau in der Geberkolben-Kammer 10 sorgt. Außerdem ist eine weitere Ringdichtung 32 als Sekundärdichtung vorgesehen, die den hinter der Primärdichtung befindlichen, drucklosen Sekundärraum nach außen abdichtet und das Eindringen von Schmutz in das System verhindert.

An die Geberkolben-Kammer 10 ist (hier nicht erkennbar) die Hydraulikleitung 25 angeschlossen. Außerdem weist die Betätigungsvorrichtung 2 einen Ausgleichsbehälter 9 auf, der über einen Verbindungskanal 19 mit dem Geberkolben-Zylinder 28 beziehungsweise dessen Geberkolben-Kammer 10 verbunden ist. Die dem Zylinder 28 zugewandte Öffnung des Verbindungskanal 19 ist so angeordnet, dass bei unbetätigtem Geberkolben 11 und dementsprechender Position der Primärdichtung ein Volumenaustausch zwischen dem Ausgleichsbehälter 9 und der Geberkolben-Kammer 10 ermöglicht ist. Bei Betätigung der Bremse und Verschieben des Geberkolben 11 in Richtung des Pfeils Pf 3 wird zunächst Hydraulikflüssigkeit aus der Kammer 10 in den Ausgleichsbehälter 9 gedrückt, bis die Öffnung des Verbindungskanal 19 von der Primärdichtung überfahren wird. Anschließend wird Hydraulikflüssigkeit von der Geberkolben-Kammer 10 über die Hydraulikleitung 25 in die Druckkammern 4 der Bremsvorrichtung 3 gepumpt. Die Bremskolben 6 verschieben die Bremsbeläge 7 und sobald diese an der Bremsscheibe 8 anliegen, wird Bremsdruck aufgebaut.

Wenn die Bremskolben 6 beim Betätigen aufgrund abgenützter Bremsbeläge 7 nachgestellt haben, entsteht beim Loslassen des Bremshebels 30 und dem Rückstellen des Geberkolbens 11 ein Unterdruck im Hydrauliksystem, da die Bremsanlage ein geschlossenes, hydraulisches System bildet. Dieser Unterdruck wird ausgeglichen, indem die Primärdichtung überströmt wird und gleichzeitig Hydraulikflüssigkeit aus dem Ausgleichsbehälter 9 in den Sekundärraum zwischen der Primärdichtung (Dichtring 31) und der Sekundärdichtung (Ringdichtung 32) nachströmt.

Das Ausführungsbeispiel gemäß Fig. 3 zeigt den Ausgleichsbehälter 9 in vergrößerter Ansicht, der, wie auch in Fig. 2 erkennbar, in ein Gehäuse 22 der Betätigungsvorrichtung 2 integriert ist.

Der Ausgleichsbehälter 9 hat eine elastische Wandung, die eine bewegliche Membrane 13 bildet und die in Abhängigkeit vom Hydraulikflüssigkeitsfüllstand unterschiedliche Lagen einnimmt. Es könnte für die bewegliche Membrane auch ein Balg, zum Beispiel ein Faltenbalg oder eine Kolben-Zylinderanordnung vorgesehen sein.

Zur Detektierung der Position der beweglichen Membrane 13 ist an dieser innenseitig ein Geber 16, beispielsweise ein Magnet angeordnet, der einem Sensor 15 an der gegenüberliegenden Innenseite 14 des Ausgleichsbehälters 9 zugeordnet ist. Im Ausführungsbeispiel sind sowohl der Geber 16 als auch der Sensor 15 innenseitig in dem Ausgleichsbehälter 9 angeordnet. Eine außenseitige Anordnung ist ebenfalls möglich mit dem Vorteil, dass eine einfachere, bedarfsweise auch nachträgliche Montage von Geber und Sensor an dem Ausgleichsbehälter 9 möglich ist und dass keine dichten Durchführungen der Sensorleitung 17 erforderlich sind.

Der Sensor 15 detektiert die Lage des Gebers 16, welche sich in Abhängigkeit von der Position der Membran 13 und damit vom Füllstand der Hydraulikflüssigkeit im Ausgleichsbehälter 9 verändert.

In Fig. 3 ist der Geber 16 in zwei verschiedenen Positionen dargestellt. In der einen Position weist der Ausgleichsbehälter 9 einen maximalen Füllstand auf und dementsprechend hat der Geber 16 seinen größtmöglichen Abstand zu dem Sensor 15. Diese Position der Membrane 13 stellt sich ein, wenn die Bremsbeläge 7 in Ordnung sind und ihre volle Stärke haben. Mit fortschreitender Abnützung der Bremsbeläge 7 nimmt der Füllstand der Druckkammer 4 in der Bremsvorrichtung 3 durch das laufende, automatische Nachstellen der Bremskolben 6 zu und in gleichem Maß der Füllstand in dem Ausgleichsbehälter 9 ab, nachdem ein Flüssigkeitsausgleich zwischen Druckkammer 4, Geberkolbenkammer 10 und Ausgleichsbehälter 9 stattgefunden hat.

Strichliniert ist der Verlauf der Membrane 13 bei abgenützten Bremsbelägen 7 angedeutet, wobei der Abstand zwischen Sensor und Geber deutlich verringert ist.

Der Sensor 15 kann über die Sensorleitung 17 mit einer hier nicht dargestellten Mess- und Anzeigeeinrichtung verbunden sein, mittels der eine Auswertung des Sensorsignals und bei Überschreiten eines vorgebbaren Abnützungsgrads der Bremsbeläge 7 eine Warnsignalisierung erfolgen kann. Auch eine kontinuierliche Zustandsanzeige des Abnützungsgrads der Bremsbeläge 7 ist möglich.

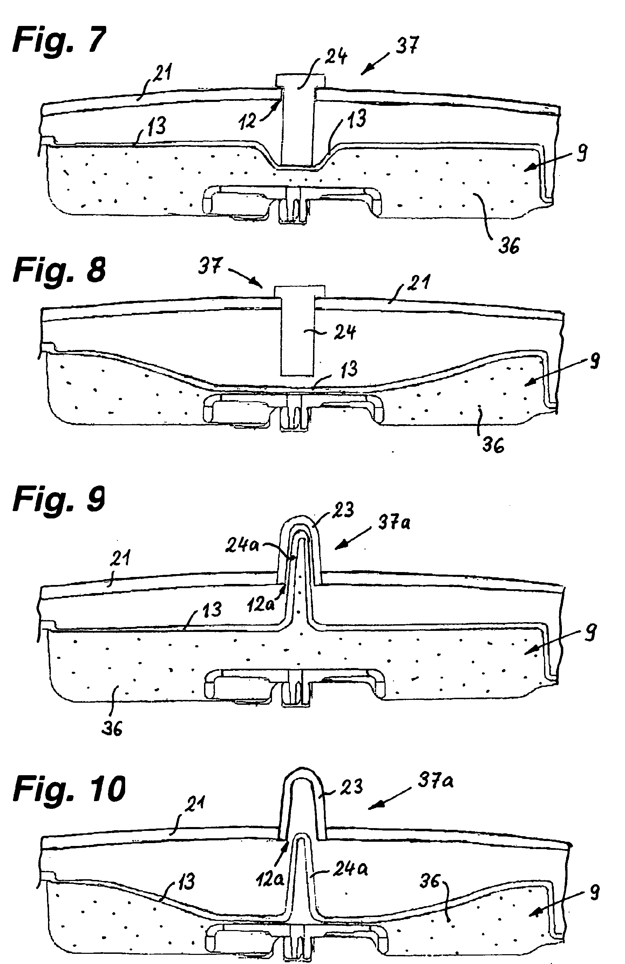

Im Ausführungsbeispiel gemäß Fig. 7 und 8 ist ein Füllstandsanzeiger 37 vorgesehen, bei dem das Ausgleichsbehälter-Gehäuse 22 der Betätigungsvorrichtung 2 eine Abdeckung 21 mit einer Öffnung 12 aufweist, in die ein auf die Membrane 13 gerichtetes und diese bei ausreichendem Füllstand des Ausgleichsbehälters 9 berührendes, transparentes Einsatzteil als Signalgeber 24 eingesetzt ist (Fig. 7).

Bei abgenutzten Bremsbelägen 7 und dementsprechend verringertem Füllstand von Hydraulikflüssigkeit in dem Ausgleichsbehälter 9 ist das innere Ende des transparenten Signalgebers 24 von der Membrane abgehoben, also beabstandet (Fig. 8), so dass sich bei Betrachtung durch das transparente Einsatzteil in Richtung Membrane ein anderes Bild ergibt als bei auf der Membrane aufliegendem Signalgeber. Beispielsweise kann das Bild zwischen einem dunklen und einem hellen Fleck wechseln.

Im Ausführungsbeispiel gemäß Fig. 9 und 10 ist ein Füllstandsanzeiger 37a vorgesehen, bei dem die sichtseitige Abdeckung 21 des Ausgleichsbehälter-Gehäuses 22 eine Öffnung 12a aufweist, welche von einem stabförmigen Signalgeber 24a nach außen hin überragt wird. Auf diese Weise ist der Überstand des mit der Membrane 13 verbundenen und hier durch eine Ausformung der Membrane 13 gebildeten Signalgebers 24a ein Maß für den Füllstand im Ausgleichsbehälter 9.

Die Öffnung 12a der Abdeckung 21 weist auf der Außenseite ein transparentes Schutzgehäuse 23 auf, in das der stabförmige Signalgeber 24a hineinragt. Auf diese Weise ist der Signalgeber geschützt.

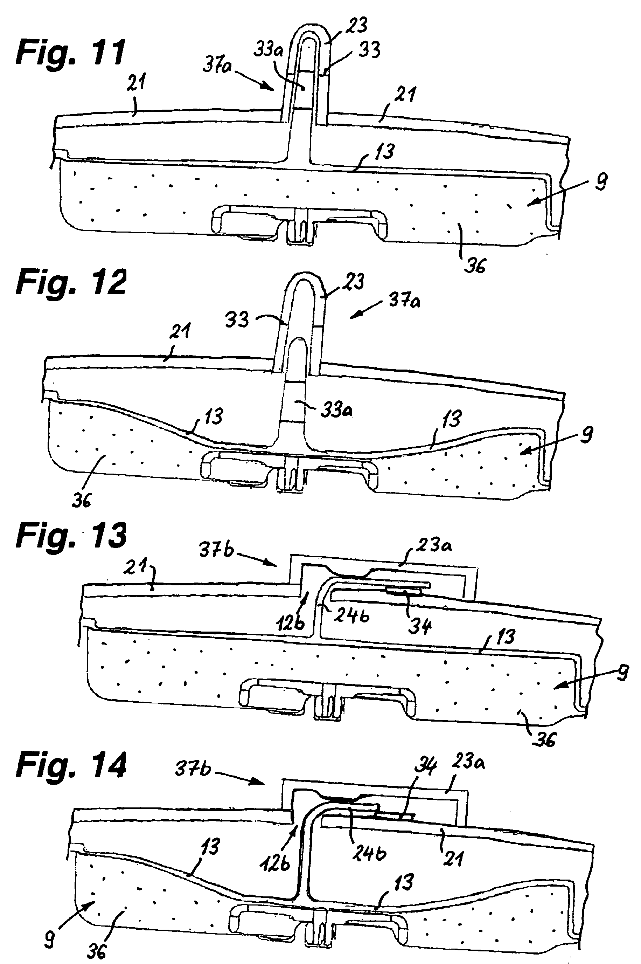

Das Schutzgehäuse 23 und/oder der stabförmige Signalgeber 24a können, wie in den Figuren 11 und 12 gezeigt, Markierungen 33, 33a zur genaueren Kontrolle der Position des Signalgebers aufweisen.

Die Figuren 13 und 14 zeigen einen Füllstandsanzeiger 37b mit einem Ausgleichsbehälter 9 und einem Signalgeber 24b, der als flexible Lasche ausgebildet ist. Diese ist mit einem Ende an der Membrane 13 befestigt, durch eine Öffnung 12b in der Abdeckung 21 geführt und verläuft dann etwa parallel zur Außenseite der Abdeckung 21, geführt innerhalb eines Schutzgehäuses 23a.

Im Ausführungsbeispiel ist die Lasche bei maximalem Füllstand (Fig. 13) des Ausgleichsbehälters 9 mit ihrem freien Endbereich über eine Markierung 34, vorzugsweise ein rotes Feld auf der Außenseite der Abdeckung 21, geführt und deckt dieses ab. Bei abgenutzten Bremsbelägen oder einem Leck im Hydrauliksystem wird das rote Feld sichtbar, weil der Signalgeber 24b bei einem niedrigen Füllstand des Ausgleichsbehälters 9 mit entsprechend abgesenkter Membrane 13 zurückgezogen wird, wie dies in Fig. 14 erkennbar ist.

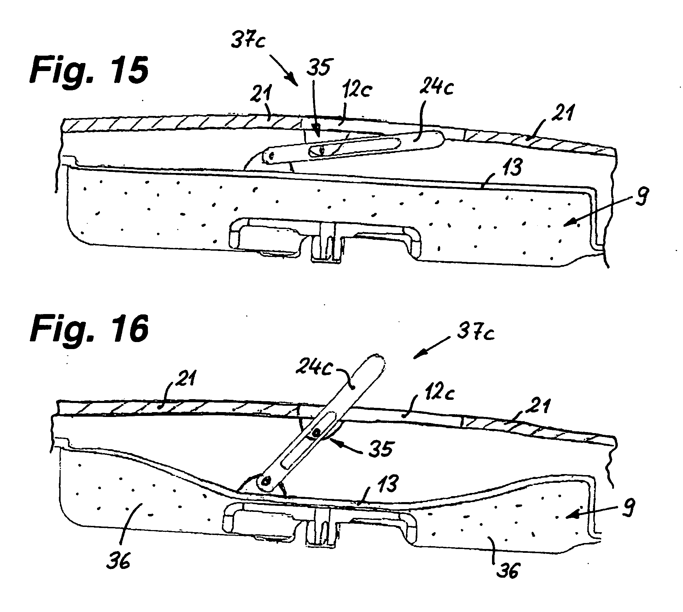

Die Figuren 15 und 16 zeigen ein weiteres Ausführungsbeispiel eines Füllstandsanzeigers 37c mit einer Bremsbelag-Verschleißanzeige an dem Ausgleichsbehälter 9 und einem als Schwenkzeiger ausgebildeten Signalgeber 24c, der mit einem Ende schwenkbar an der Membrane 13 und an der Innenwand des Gehäuses oder der Abdeckung 21 mittels einer Kulissenführung 35 geführt ist. Neben der zur Kulissenführung 35 gehörenden Lagerung des Schwenkzeigers an der Abdeckung 21 weist diese eine Öffnung 12c auf, durch die der sich abhängig von der Position der Membrane 13 aufstellbare Schwenkzeiger hindurchgreift.

Fig. 15 zeigt die Stellung des Schwenkzeigers bei maximal gefülltem Ausgleichsbehälter 9 und dementsprechend in Ordnung befindlichen Bremsbelägen, während Fig. 16 eine Warnsituation zeigt, bei der der als Schwenkzeiger ausgebildete Signalgeber 24c aufgestellt ist und über die Oberseite der Abdeckung übersteht.

Die erfindungsgemäße hydraulische Bremsanlage kann sowohl in Verbindung mit einer Scheibenbremse als auch mit einer Felgenbremse eingesetzt werden. /Ansprüche

## Patentansprüche

1. Hydraulische Bremsanlage (1) für Zweiräder, insbesondere Fahrräder, mit mindestens einer hydraulischen Betätigungsvorrichtung (2) und einer am zu bremsenden Rad befindlichen, hydraulischen Bremsvorrichtung (3), wobei die Bremsanlage (1) ein mit Hydraulikflüssigkeit (36) gefülltes, hydraulisches Gebersystem mit einem Geberkolben-Zylinder (28) und einem darin geführten Geberkolben (11) aufweist, wobei die Bremsvorrichtung (3) einen in einem Bremszylinder (26) geführten Bremskolben (6) aufweist, der zur Beaufschlagung eines Bremsbelages (7) mittels in einer zum Bremszylinder (26) gehörenden Druckkammer (4) befindlichen Hydraulikflüssigkeit verstellbar ist, wobei eine zum Geberkolben-Zylinder (28) gehörende Geberkolben-Kammer (10) hydraulisch mit der Druckkammer (4) der Bremsvorrichtung (3) verbunden ist, wobei die Bremsanlage (1) eine automatische Bremsbelagsnachstellung aufweist und wobei die Bremsanlage (1) einen Ausgleichsbehälter (9) mit Hydraulikflüssigkeit (36) aufweist, der zur Anzeige der Bremsbelagsstärke eine Füllstandsanzeige (37) für die Hydraulikflüssigkeit (36) aufweist, **dadurch gekennzeichnet, dass** der Ausgleichsbehälter (9) eine elastische, membranartige Wandung aufweist, die in Abhängigkeit vom Hydraulikflüssigkeitsfüllstand unterschiedliche Lagen einnimmt und die Füllstandsanzeige (37) bildet.

2. Bremsanlage nach Anspruch 1, **dadurch gekennzeichnet, dass** die Bremsanlage mit der Druckkammer (4), der Geberkolben-Kammer (10) und dem Ausgleichsbehälter (9) ein luftdicht geschlossenes, hydraulisches System aufweist.

3. Bremsanlage nach Anspruch 1 oder 2, **dadurch gekennzeichnet, dass** die elastische Wandung des Ausgleichsbehälters (9) einen Balg, insbesondere einen Faltenbalg mit einer Membrane (13) aufweist, der in Abhängigkeit vom Hydraulikflüssigkeitsfüllstand unterschiedliche Lagen einnimmt.

4. Bremsanlage nach einem der Ansprüche 1 bis 3, **dadurch gekennzeichnet, dass** am Ausgleichsbehälter (9) wenigstens ein Sensor (15) zur Detektierung der Position der beweglichen Membrane (13) angeordnet ist.

5. Bremsanlage nach einem der Ansprüche 1 bis 4, **dadurch gekennzeichnet, dass** die bewegliche Membrane (13) einen Signalgeber (24, 24a, 24c) aufweist, dessen Position zur Füllstandsanzeige dient.

6. Bremsanlage nach einem der Ansprüche 1 bis 5, **dadurch gekennzeichnet, dass** der Ausgleichsbehälter (9) im Bereich der Betätigungsvorrichtung (2) angeordnet und vorzugsweise in ein Gehäuse (22) integriert ist.

7. Bremsanlage nach Anspruch 5 oder 6, **dadurch gekennzeichnet, dass** das Gehäuse (22) sichtseitig eine Abdeckung (21) mit einer Öffnung (12a) aufweist, dass die Membrane (13) einen vorzugsweise etwa stabförmigen Signalgeber (24a) aufweist, der die Öffnung(12a) nach außen hin überragt und dass der Überstand des Signalgebers ein Maß für den Füllstand im Ausgleichsbehälter (9) ist.

8. Bremsanlage nach Anspruch 7, **dadurch gekennzeichnet, dass** der stabförmige Signalgeber (24a) durch eine Ausformung der Membrane (13) gebildet ist.

9. Bremsanlage nach einem der Ansprüche 5 bis 8, **dadurch gekennzeichnet, dass** über der Öffnung (12a, 12b) der Abdeckung (21) ein auf der Außenseite der Abdeckung erhabenes zumindest bereichsweise transparentes Schutzgehäuse (23) angeordnet ist und der stabförmige Signalgeber (24a) in dieses Schutzgehäuse hineinragt.

10. Bremsanlage nach einem der Ansprüche 5 bis 9, **dadurch gekennzeichnet, dass** der Signalgeber (24b) als flexible, mit der Membrane (13) verbundene Lasche ausgebildet ist und dass die Lasche bei maximalem Füllstand des Ausgleichsbehälters (9) vorzugsweise mit ihrem Endbereich über einer Markierung (34) auf der Außenseite der Abdeckung (21) geführt ist.

11. Bremsanlage nach einem der Ansprüche 5 bis 10, **dadurch gekennzeichnet, dass** der Signalgeber (24c) als Schwenkzeiger ausgebildet ist und mit einem Ende schwenkbar an der Membrane (13) und an der Innenwand des Gehäuses mittels einer Kulissenführung (35) geführt ist und abhängig von der Position der Membrane (13) mit seinem freien Ende durch die Öffnung (12c) der Gehäuseabdeckung (21) hindurch aufstellbar ist.

12. Bremsanlage nach einem der Ansprüche 5 bis 11, **dadurch gekennzeichnet, dass** der Signalgeber (24, 24a, 24c) und/oder das Schutzgehäuse (23, 23a) Markierungen (33, 33a) und/oder mindestens einen farbigen Abschnitt (34) zur Kontrolle der Position des Signalgebers aufweist.

13. Bremsanlage nach einem der Ansprüche 1 bis 3, **dadurch gekennzeichnet, dass** ein auf die Membrane (13) gerichtetes, diese bei ausreichendem Füllstand des Ausgleichsbehälters (9) berührendes und bei abgefahrenen Bremsbelägen und dementsprechend verringertem Füllstand von der Membrane (13) abgehobenes, transparentes Einsatzteil als Signalgeber (24) vorgesehen ist.

14. Bremsanlage nach einem der Ansprüche 1 bis 13, **dadurch gekennzeichnet, dass** der Ausgleichsbehälter (9) und die Geberkolben-Kammer (10) über mindestens einen bei unbetätigter Bremse offenen und bei betätigter Bremse geschlossenen Verbindungskanal (19) verbunden sind.

15. Bremsanlage nach einem der Ansprüche 1 bis 14, **dadurch gekennzeichnet, dass** am Geberkolben (11) eine Dichtung (31) zum flüssigkeitsdichten Schließen des Verbindungskanals (19) zwischen dem Ausgleichsbehälter (9) und der Geberkolben-Kammer (10) bei Betätigen der Bremse vorgesehen ist.

## Claims

1. A hydraulic braking system (1) for two-wheelers, in particular bicycles, comprising at least one hydraulic actuating device (2) and a hydraulic braking device (3) located on the wheel to be decelerated, wherein the braking system (1) has a hydraulic master system filled with hydraulic fluid (36) and having a master piston cylinder (28) and a master piston (11) guided therein, the braking device (3) having a brake piston (6) which is guided in a brake cylinder (26) and can be adjusted to load a brake pad (7) by means of hydraulic fluid disposed in a pressure chamber (4) belonging to the brake cylinder (26), wherein a master piston chamber (10) belonging to the master piston cylinder (28) hydraulically communicates with the pressure chamber (4) of the braking device (3), wherein the braking system (1) has an automatic brake pad adjustment and wherein the braking system (1) includes a brake fluid reservoir (9) which holds hydraulic fluid (36) and has a level indicator (37) for the hydraulic fluid (36) to indicate the brake pad thickness, **characterized in that** the brake fluid reservoir (9) has a resilient, membrane-like wall which depending on the hydraulic fluid filling level adopts different positions and forms the level indicator (37).

2. The braking system according to claim 1, **characterized in that** the braking system forms a hermetically sealed, hydraulic system together with the pressure chamber (4), the master piston chamber (10) and the brake fluid reservoir (9).

3. The braking system according to claim 1 or 2, **characterized in that** the resilient wall of the brake fluid reservoir (9) has bellows, in particular corrugated bellows including a membrane (13), which adopt different positions depending on the hydraulic liquid filling level.

4. The braking system according to any of claims 1 to 3, **characterized in that** at least one sensor (15) for detecting the position of the movable membrane (13) is arranged on the brake fluid reservoir (9).

5. The braking system according to any of claims 1 to 4, **characterized in that** the movable membrane (13) has a signal generator (24, 24a, 24c) whose position serves for level indication.

6. The braking system according to any of claims 1 to 5, **characterized in that** the brake fluid reservoir (9) is arranged in the area of the actuating device (2) and is preferably integrated into a housing (22).

7. The braking system according to claim 5 or 6, **characterized in that** the housing (22) has a cover (21) with an opening (12a) on the visible side, that the membrane (13) has a preferably approximately rod-shaped signal generator (24a) which externally protrudes from the opening (12a) and that the protrusion of the signal generator is a measure of the filling level in the brake fluid reservoir (9).

8. The braking system according to claim 7, **characterized in that** the rod-shaped signal generator (24a) is developed by the shape of the membrane (13).

9. The braking system according to any of claims 5 to 8, **characterized in that** an at least partially transparent protective housing (23) protruding on the outer side of the cover is arranged over the opening (12a, 12b) of the cover (21) and the rod-shaped signal generator (24a) extends into this protective housing.

10. The braking system according to any of claims 5 to 9, **characterized in that** the signal generator (24b) is developed as a flexible tongue connected with the membrane (13) and that with the maximum filling level of the brake fluid reservoir (9) the tongue is preferably guided with its end portion over a marking (34) on the outer side of the cover (21).

11. The braking system according to any of claims 5 to 10, **characterized in that** the signal generator (24c) is made as a pivot indicator and is pivotably guided with one end at the membrane (13) and at the inner wall of the housing by means of a sliding block guide (35) and, depending on the position of the membrane (13), can be raised with its free end through the opening (12c) of the housing cover (21).

12. The braking system according to any of claims 5 to 11, **characterized in that** the signal generator (24, 24a, 24c) and/or the protective housing (23, 23a) has markings (33, 33a) and/or at least one colored portion (34) to control the position of the signal generator.

13. The braking system according to any of claims 1 to 3, **characterized in that** a transparent insert directed to the membrane (13), touching the latter when the filling level of the brake fluid reservoir (9) is sufficient and detached from the membrane (13) when the brake pads are worn out and the filling level is correspondingly reduced is provided as the signal generator (24).

14. The braking system according to any of claims 1 to 13, **characterized in that** the brake fluid reservoir (9) and the master piston chamber (10) communicate via at least one communication channel (19) open when the brake is not actuated and closed when the brake is actuated.

15. The braking system according to any of claims 1 to 14, **characterized in that** a gasket (31) for the liquid-tight sealing of the communication channel (19) is provided between the brake fluid reservoir (9) and the master piston chamber (10) at the master piston (11) when the brake is actuated.

## Revendications

1. Installation de freinage hydraulique (1) pour deux-roues, en particulier pour bicyclettes, comprenant au moins un dispositif d'actionnement hydraulique (2) et un dispositif de freinage hydraulique (3) qui se trouve sur la roue à freiner, dans laquelle l'installation de freinage (1) comprend un système émetteur hydraulique rempli d'un liquide hydraulique (36) avec un cylindre émetteur (28) et un piston émetteur (11) guider dans celui-ci, le dispositif de freinage (3) comprenant un piston de freinage (6) guider dans un cylindre de frein (26), qui est déplaçable, pour attaquer une garniture de frein (7), au moyen d'un liquide hydraulique se trouvant dans une chambre à pression (4) appartenant au cylindre de frein (26), dans lequel une chambre pour piston émetteur (10), appartenant au cylindre émetteur (28), est reliée sur le plan hydraulique avec la chambre à pression (4) du dispositif de freinage (3), et l'installation de freinage (1) comprend un dispositif de réajustement automatique pour la garniture de freinage, et l'installation de freinage comprend un récipient de compensation (9) avec du liquide hydraulique, qui comprend un indicateur de niveau de remplissage (37) pour le liquide hydraulique (36) en vue d'indiquer l'épaisseur de la garniture de frein, **caractérisé en ce que** le récipient de compensation (9) comporte une paroi élastique semblable à une membrane, qui occupe des positions différentes en fonction du niveau de remplissage du liquide hydraulique et qui forme l'indicateur de niveau de remplissage (37).

2. Installation de freinage selon la revendication 1, **caractérisée en ce que** l'installation de freinage comprend, avec la chambre à pression (4), avec la chambre pour piston émetteur (10) et avec le récipient de compensation (9), un système hydraulique fermé de manière étanche à l'air.

3. Installation de freinage selon la revendication 1 ou 2, **caractérisée en ce que** la paroi élastique du récipient de compensation (9) comprend un soufflet, en particulier un soufflet plissé avec une membrane (13) qui occupe des positions différentes en fonction du niveau de remplissage du liquide hydraulique.

4. Installation de freinage selon l'une des revendications 1 à 3, **caractérisée en ce qu'**au moins un capteur (15) pour détecter la position de la membrane mobile (13) est agencé sur le récipient de compensation (9).

5. Installation de freinage selon l'une des revendications 1 à 4, **caractérisée en ce que** la membrane mobile (13) comprend un émetteur de signal (24, 24a, 24c), dont la position sert à l'indication du niveau de remplissage.

6. Installation de freinage selon l'une des revendications 1 à 5, **caractérisée en ce que** le récipient de compensation (9) est agencé dans la région du dispositif d'actionnement et est de préférence intégré dans un boîtier (22).

7. Installation de freinage selon la revendication 5 ou 6, **caractérisée en ce que** le boîtier (22) comporte, du côté visible, un recouvrement (21) avec une ouverture (12a), **en ce que** la membrane (13) comprend un émetteur de signal (24a) de préférence approximativement sous la forme d'un barreau, qui surplombe l'ouverture (24a) vers l'extérieur, et **en ce que** le surplomb de l'émetteur de signal constitue une mesure pour le niveau de remplissage dans le récipient de compensation (9).

8. Installation de freinage selon la revendication 7, **caractérisée en ce que** l'émetteur de signal (24a) en forme de barreau est formé par une conformation de la membrane (13).

9. Installation de freinage selon l'une des revendications 5 à 8, **caractérisée en ce qu'**un boîtier protecteur (23) en surélévation, au moins localement transparent, est agencé sur le côté extérieur du recouvrement (21) au-dessus de l'ouverture (12a, 12b) du recouvrement (21), et l'émetteur de signal (24a) en forme de barreau pénètre dans ce boîtier protecteur.

10. Installation de freinage selon l'une des revendications 5 à 9, **caractérisée en ce que** l'émetteur de signal (24b) est réalisé sous forme de patte flexible reliée à la membrane (13), et **en ce que** la patte, pour le niveau de remplissage maximum du récipient de compensation (9), est guidée de préférence par sa région terminale au-dessus d'une marque (34) sur la face extérieure du recouvrement (21).

11. Installation de freinage selon l'une des revendications 5 à 10, **caractérisée en ce que** l'émetteur de signal (24c) est réalisé sous forme d'indicateur pivotant, est guidé avec une extrémité en pivotement contre la membrane (13), et est guidé au niveau de la paroi intérieure du boîtier au moyen d'un guidage à coulisse (35) et, en fonction de la position de la membrane (13), il peut être dressé avec son extrémité libre traversant l'ouverture (12c) du recouvrement (21) du boîtier.

12. Installation de freinage selon l'une des revendications 5 à 11, **caractérisée en ce que** l'émetteur de signal (24, 24a, 24c) et/ou le boîtier protecteur (23, 23a) comporte des marques (33, 33a) et/ou au moins un tronçon coloré (34) pour le contrôle de la position de l'émetteur de signal.

13. Installation de freinage selon l'une des revendications 1 à 3, **caractérisée en ce qu'**il est prévu à titre d'émetteur de signal (24) une pièce d'insert transparente, orientée vers la membrane (13), touchant celle-ci lorsque le niveau de remplissage du récipient de compensation (9) est suffisant et qui, lorsque les garnitures de freinage sont usées et que le niveau de remplissage est diminué en conséquence, se soulève de la membrane (13).

14. Installation de freinage selon l'une des revendications 1 à 13, **caractérisée en ce que** le réservoir de compensation (9) et la chambre (10) pour le piston émetteur sont reliés par au moins un canal de liaison (19) ouvert lorsque le frein n'est pas actionné et fermé lorsque le frein est actionné.

15. Installation de freinage selon l'une des revendications 1 à 14, **caractérisée en ce qu'**il est prévu un joint (31) sur le piston émetteur (11), afin de refermer de manière étanche au fluide le canal de liaison (19) entre le récipient de compensation (9) et la chambre (10) pour le piston émetteur lors de l'actionnement du frein.
